# EUROPÄISCHE PATENTSCHRIFT

(11) **EP 1 249 913 B1**
(45) Veröffentlichungstag und Bekanntmachung des Hinweises auf die Patenterteilung: **25.01.2006**
(21) Anmeldenummer: 02003788.3
(22) Anmeldetag: 20.02.2002
(51) Int. Cl.: H02G 3/08

(54) **Verteilergehäuse mit Anschlussteilen**
Distribution boxes with connection pieces
Boîtes de distribution avec pièces de fixation

(30) Priorität: 10.04.2001 DE 20106236 U
(43) Veröffentlichungstag der Anmeldung: 16.10.2002
(73) Patentinhaber: Anton Hummel Verwaltungs GmbH, 79183 Waldkirch (DE)
(72) Erfinder: Bartholomä, Mario, 79297 Winden (DE); Zügel, Fritz, 79183 Waldkirch (DE); Hoch, Achim, 79183 Waldkirch (DE)
(74) Vertreter: Maucher, Wolfgang

(56) Entgegenhaltungen:
- EP-A- 0 639 878
- DE-U- 8 912 391

## Beschreibung

Die Erfindung betrifft ein Verteilergehäuse mit Anschlußteilen für elektrische Anschlüsse, wobei das Verteilergehäuse wenigstens eine Eintrittsöffnung für ein elektrisches Kabel und mindestens zwei Austrittsöffnungen für von dem Kabel abgezweigte elektrische Anschlüsse aufweist und etwa quaderförmig ausgebildet ist, wobei die Eintrittsöffnung sowie die Austrittsöffnungen jeweils an einer Fläche dieses Quaders angeordnet sind und im Bereich der Austrittsöffnungen zum Befestigen von die abgehenden elektrischen Anschlüsse enthaltenden Anschlußteilen Verbindungsmittel für deren Montage vorgesehen sind.

Aus EP 0 639 878 A1 ist ein derartiges Verteilergehäuse bekannt. Dabei hat dieses an seinen Eintritts- und Austrittsöffnungen Innengewinde, zu denen ein Außengewinde eines jeweiligen Anschlussteils passt. Dies bedeutet für die Montage, dass das Anschlussteil zunächst mit seinem Gewindeanfang genau an dem Innengewinde des Verteilergehäuses positioniert und dann eingeschraubt werden muss, was nicht nur zeitaufwändig ist, sondern auch zu einer mehrfachen Umdrehung der Anschlußteile führt, was für von diesem Anschlußteilen umschlossene Kabel ungünstig sein kann.

Ausserdem ist ein derartiges Verteilergehäuse aus der Praxis bekannt. Als Verbindungsmittel für die Montage der Anschlußteile haben diese einen Flansch, der mittels Schrauben an entsprechenden Schraublöchern des Verteilergehäuses befestigt werden kann. Dies bedeutet einen relativ hohen Montageaufwand und vor allem auch einen großen Zeitaufwand bei der Montage, da mehrere Schrauben in die Schraubenlöcher eingesteckt und eingedreht werden müssen.

Es besteht deshalb die Aufgabe, ein Verteilergehäuse mit Anschlußteilen der eingangs genannten Art zu schaffen, bei welchem vor allem der Zeitaufwand für die Montage der Anschlußteile an dem Verteilergehäuse vermindert ist.

Zur Lösung dieser Aufgabe ist bei einem Verteilergehäuse der eingangs genannten Art vorgesehen, daß zumindest im Bereich der Austrittsöffnungen an dem Verteilergehäuse jeweils eine Schnellkupplung vorgesehen ist, zu der eine an dem Anschlußteil angeordnete Gegenkupplung passt, wobei die Gegenkupplung an dem Anschlußteil ein im Wesentlichen vieleckiger oder viereckiger Flansch ist, dessen Ecken abgeschrägt oder abgerundet sind, und wobei die Schnellkupplung an dem Verteilergehäuse durch den Flansch in Gebrauchsstellung im Eckbereich übergreifende, mit Hinterschneidungen ausgestattete Vorsprünge gebildet ist, welche über die die zugehörige Eintritts- und/oder Austrittsöffnung aufweisende Seitenfläche des Verteilergehäuses überstehen, und eine Begrenzung der Hinterschneidungen jeweils etwa in der Ebene der Seitenfläche angeordnet oder von dieser gebildet ist, und dass die Vorsprünge mit den Hinterschneidungen einen derartigen Abstand zueinander haben, dass die Ecken der Flansche vor dem Verdrehen dieser Flansche unter die Hinterschneidungen zwischen benachbarte Vorsprünge passen, so dass die Ecken der Flansche von der Seite in die Hinterschneidungen eindrehbar sind.

Dadurch ist es möglich, Anschlussteile, wie Stecker, Winkelstücke, Verschlüsse, Kabelverschraubungen oder weitere Verteilergehäuse mit Hilfe der Schnellkupplung, also mit geringem Zeitaufwand und allenfalls einer geringen Relativverdrehung an dem Verteilergehäuse zu befestigen.

Dabei bildet die Schnellkupplung mit der Gegenkupplung eine Art Bajonette-Verschluss dadurch, dass an dem Verteilergehäuse zum Erfassen der Anschlußteile krallenartige Vorsprünge vorgesehen sind, die die Hinterschneidungen aufweisen, welche Hinterschneidungen sich radial zur Mitte hin und auch in Umfangsrichtung öffnen, so daß das jeweilige Anschlußteil mit seinem Flansch auf die entsprechende Seitenfläche des Verteilergehäuses aufgesetzt werden kann, wobei die Eckbereiche der Flansche zunächst zwischen diesen krallenartigen Vorsprüngen zu liegen kommen. Anschließend wird das Anschlußteil in dieser Positionierung verdreht, so daß die Ecken der Flansche in die Hinterschneidungen eintreten, wodurch die Kupplung zwischen dem Anschlußteil und dem Verteilergehäuse bereits hergestellt ist. Dabei ist von erheblichem Vorteil, das Anschlußteile mit solchen viereckigen Flanschen handelsübliche Teile sind, die also nicht speziell an das Verteilergehäuse angepaßt werden müssen, dennoch aber die angestrebte Schnellmontage erlauben. Erforderlich ist lediglich, daß die axiale Abmessung der jeweiligen Hinterschneidung der jeweiligen Dicke des Flansches in seinem Eckebereich etwa entspricht, so daß der Flansch in die Hinterschneidung hineingedreht werden kann.

Zweckmäßig ist es, wenn an wenigstens einem Vorsprung im Bereich einer Hinterschneidung ein Klemmelement vorgesehen ist. Das Klemmelement kann eine Klemmschraube oder Madenschraube sein.

Dadurch ist es möglich, den Bereich eines Flansches eines Anschlußteiles, der in diese entsprechende Hinterschneidung eingreift, mit Hilfe des verstellbaren Klemmelementes, beispielsweise einer Klemmschraube zu fixieren, so daß ungewollte Lösebewegungen an dem Anschlußteil vermieden werden. Dabei genügt ein einziges Klemmelement oder eine einzige Schraubbewegung an einer Klemmschraube, um die Verbindung von Schnellkupplung und Gegenkupplung gegen ungewolltes Lösen zu blockieren, was den Zeitaufwand bei der Montage nur unwesentlich vergrößert.

Besonders vielseitig kann ein Verteilergehäuse der eingangs definierten Art sein und angewendet werden, wenn drei Austrittsöffnungen jeweils mit einer Schnellkupplung vorgesehen sind. Dadurch bestehen unterschiedliche Möglichkeiten, elektrische Anschlüsse oder Kabelabgänge an unterschiedliche örtliche Verhältnisse anzupassen. Dabei ist dann an jedem dieser Anschlüsse oder Abgänge der Vorteil einer entsprechenden Schnellmontage vorhanden, selbst wenn eventuell eine der Austrittsöffnungen im Einzelfalle nicht benötigt und mit einem Blindverschluß verschlossen werden soll.

Dabei ist es zweckmäßig, wenn eine der Austrittsöffnungen mit der Eintrittsöffnung und die beiden anderen Austrittsöffnungen miteinander fluchten. Dies ergibt eine bestmögliche Anpaßbarkeit an unterschiedliche räumliche Verhältnisse mit einer gleichzeitig doch begrenzten Anzahl von Öffnungen an dem Verteilergehäuse.

Zweckmäßig ist es, wenn das Verteilergehäuse etwa die Form eines Würfels hat und an vier, fünf oder allen sechs Seitenflächen Öffnungen vorgesehen sind, die als Eintritts- und/oder Austrittsöffnungen ausgestaltet und mit Schnellkupplungen versehen sein können. Durch die Würfelform ergeben sich praktisch in allen Richtungen übereinstimmende Abmessungen, so daß Anschlüsse und Anschlußteile jeweils einen übereinstimmenden Platzbedarf haben und das Verteilergehäuse selbst auch in unterschiedlicher Orientierung eingesetzt werden kann.

Eine Ausgestaltung des Verteilergehäuses von erheblicher, auch eigener erfinderischer Bedeutung kann darin bestehen, daß an seiner eine Eintrittsöffnung aufweisenden Fläche eine zu den Schnellkupplungen der Austrittsöffnungen passende Gegenkupplung angeordnet und das Verteilergehäuse mit dem Bereich seiner Eintrittsöffnung mit einem weiteren Verteilergehäuse im Bereich von einer von dessen Austrittsöffnungen kuppelbar ist, so daß mehrere derartige übereinstimmende Verteilergehäuse modular kombinierbar sind.

Durch diese Ausgestaltung des Verteilergehäuses lassen sich also mehrere Verteilergehäuse unmittelbar und gleichzeitig mit geringem Zeitaufwand miteinander verbinden, so daß auch eine entsprechende Große Anzahl von Anschlußteilen mit entsprechenden elektrischen Anschlüssen angebracht werden können. Somit lassen sich auch größere elektrische Verzweigungen gut mit entsprechenden Verteilergehäusen erfassen und bewerkstelligen. Praktisch wird ein Bausatz von Verteilergehäusen und Anschlußteilen gebildet, dessen Einzelteile vielseitig kombiniert werden können, um unterschiedlichste Anschlüsse und elektrische Abzweigungen und dergleichen bilden zu können. Durch den modularen Aufbau aus einer Mehrzahl übereinstimmender erfindungsgemäßer Verteilergehäuse können nahezu beliebig viele elektrische Anschlüsse von einem oder auch mehreren Kabeln vorgesehen werden.

Eine weitere Ausgestaltung des erfindungsgemäßen Verteilergehäuses kann darin bestehen, daß an mehreren seiner Flächen im Bereich mehrerer Eintrittsöffnungen jeweils Gegenkupplungen angeordnet sind. Somit können solche Verteilergehäuse nicht nur in einer sich fortsetzenden Reihe zusammengesetzt werden, sondern es können auch mehrere Verteilergehäuse zu einem Winkel oder in T-Form oder gegebenenfalls sogar kreuzförmig und räumlich zusammengesetzt werden.

Zweckmäßig ist es dabei, wenn die im Bereich von Eintrittsöffnungen angeordnete Gegenkupplung zu der Schnellkupplung und den dort vorgesehenen Hinterschneidungen der Austrittsöffnungen passende Vorsprünge aufweist, die gegenüber der die Eintrittsöffnung aufweisenden Seitenfläche des Verteilergehäuses einen Abstand haben, der etwa dem Abstand zwischen einer Hinterschneidung und der Stirnseite des zugehörigen Vorsprungs entspricht. Somit paßt der Vorsprung einer Schnellkupplung mit seinem über die Hinterschneidung überstehenden Teil zwischen den Vorsprung und die die Eintrittsöffnung aufweisende Seitenfläche. Die Länge dieser Vorsprünge der Gegenkupplung in Umfangsrichtung ist dabei so bemessen, daß sie zwischen zwei benachbarte Vorsprünge mit Hinterschneidungen der Schnellkupplung paßt, so daß auch diese Vorsprünge zunächst seitlich der Hinterschneidungen angesetzt und dann in diese hineingedreht werden können.

Eine konstruktiv einfache und dennoch stabile Anordnung ergibt sich, wenn die zu der Schnellkupplung passenden Vorsprünge an einem gegenüber der Seitenfläche mit der Eintrittsöffnung vorspringenden Ring angeordnet sind und diesem gegenüber radial nach außen vorstehen, dabei können die an dem Ring angeordneten Vorsprünge über einen Umfangsbereich verlaufen, dessen Länge gleich oder kürzer als der Abstand zwischen zwei benachbarten, Hinterschneidungen aufweisenden Vorsprüngen der Schnellkupplung ist, damit die Vorsprünge also zunächst in den Zwischenraum zwischen zwei Hinterschneidungen eingesetzt und dann in ihre Kupplungsstellung gedreht werden können.

Für eine gute Anpaßbarkeit an unterschiedlichste Anforderungen können alle Austrittsöffnungen oder alle Austrittsöffnungen und die Eintrittsöffnungen an dem Verteilergehäuse denselben Durchmesser haben. Somit braucht bei der Montage von Anschlußteilen nicht auf unterschiedliche Abmessungen der jeweiligen Öffnungen geachtet werden.

Eine weitere zweckmäßige Ausgestaltung des erfindungsgemäßen Verteilergehäuses kann darin bestehen, daß die Eintritts- und/oder Austrittsöffnungen ein Innengewinde haben. Dadurch wird die Möglichkeit der Anbringung von Anschluß- oder Zusatzteilen, die mit den Verteilergehäusen einen Bausatz bilden können, noch weiter vergrößert. Es können dann auch mit einem Außengewinde versehene Zusatzteile, wie Muffen, Hülsen, Kabelverschraubungen oder Blindverschlüsse in die jeweilige Öffnung eingeschraubt werden, d.h. es können auch Anschlußteile zum Einsatz kommen, die keinen zu den Hinterschneidungen passenden Flansch haben.

Es sei noch erwähnt, daß an dem als Gegenkupplung mit radial abstehenden Vorsprüngen ausgebildeten Ring stirnseitig wenigstens eine Nut zur Aufnahme eines Dichtringes angeordnet sein kann. Ein solcher Dichtring ergibt dann eine Doppelfunktion, weil er den entsprechenden Kupplungsbereich abdichtet und außerdem die in Gebrauchsstellung gebildete Schnellkupplung zumindest in axialer Richtung spielfrei macht.

Die radial zur Mitte offenen Hinterschneidungen der Schnellkupplungen können in Umfangsrichtung an ihren beiden Enden offen sein. Dadurch ergibt sich die Möglichkeit, das Eindrehen oder auch das Herausdrehen der Gegenkupplung in beliebiger Drehrichtung durchzuführen.

Insgesamt ergibt sich vor allem bei Kombination einzelner oder mehrerer der vorbeschriebenen Merkmale und Maßnahmen ein Verteilergehäuse mit Anschlußteilen, das vielfältig einsetzbar ist, eine große Anpaßbarkeit an unterschiedlichste Anwendungsfälle aufweist und eine sichere, gleichzeitig aber auch dennoch schnelle Montage und insbesondere auch einen modularen Aufbau aus mehreren derartigen Verteilergehäusen erlaubt.

Nachstehend ist ein Ausführungsbeispiel der Erfindung anhand der Zeichnung näher beschrieben. Es zeigt in zum Teil schematisierter und außerdem schaubildlicher Darstellung:
- Fig. 1: mehrere miteinander mittels Schnellkupplung verbundene Verteilergehäuse mit Abschlußteilen,
- Fig. 2: ein einzelnes Verteilergehäuse mit einer Eintrittsöffnung und mehreren Austrittsöffnungen mit einer Gegenkupplung für ein Anschlußteil, wobei im Bereich der Eintrittsöffnung eine zu diesen Gegenkupplungen passende Schnellkupplung angeordnet ist,
- Fig. 3: zwei Verteilergehäuse vor ihrer gegenseitigen Befestigung mit Hilfe der Schnellkupplung einer Eintrittsöffnung, die zu der Gegenkupplung einer Austrittsöffnung paßt,
- Fig. 4: einen ersten Montageschritt, bei welchem die eine Eintrittsöffnung aufweisende Fläche des einen Verteilergehäuses auf eine Austrittsöffnung aufweisende Fläche eines weiteren Verteilergehäuses aufgesetzt ist, wobei die Vorsprünge der Gegenkupplung zwischen den mit Hinterschneidungen versehenen Vorsprüngen der Schnellkupplung zu liegen kommen,
- Fig. 5: die gegenseitige Verbindung der beiden Verteilergehäuse gemäß Fig. 4 nach einer gegenseitigen Verdrehung der beiden Verteilergehäuse um etwa 45 Grad,
- Fig. 6: eine der Fig. 5 entsprechende Darstellung, bei welcher in gleicher Weise ein weiteres Verteilergehäuse zur Vorbereitung der Anordnung nach Fig. 1 angeschlossen ist.

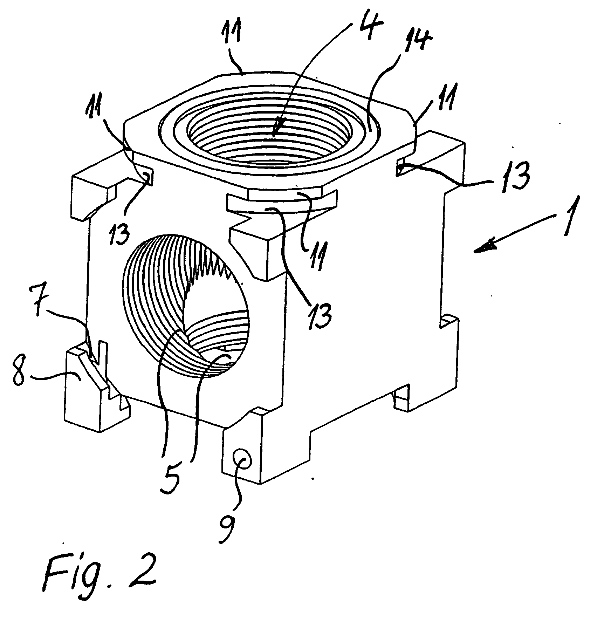

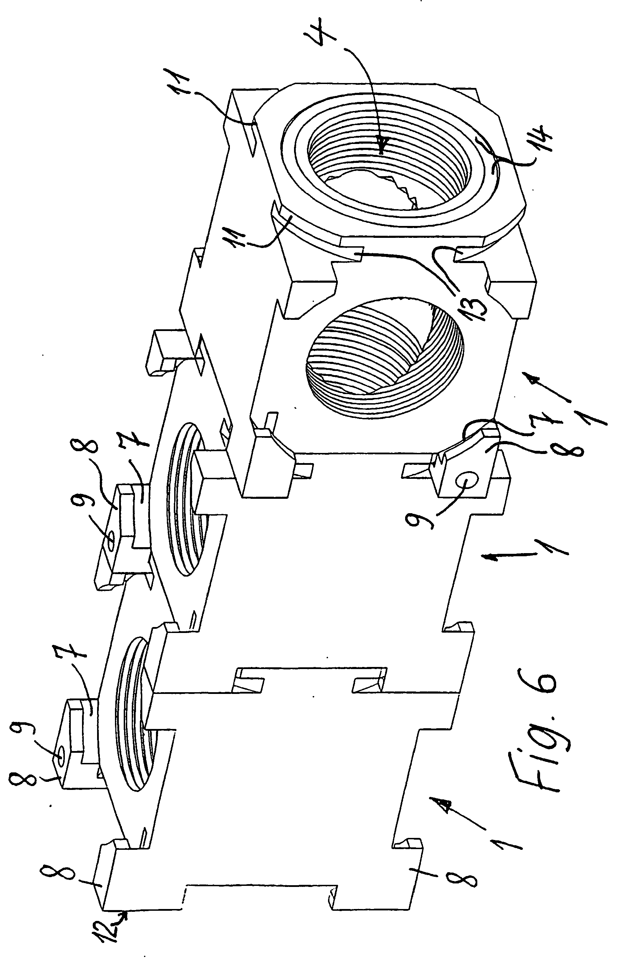

Ein im ganzen mit 1 bezeichnetes Verteilergehäuse dient dazu, mit Hilfe von Anschlußteilen 2 oder 3 elektrische Anschlüsse an ankommenden oder abgehenden elektrischen Kabeln anzubringen. Vor allem in Fig. 2 erkennt man deutlich an einem derartigen Verteilergehäuse 1 eine Eintrittsöffnung 4 für ein in den Zeichnungen der besseren Übersicht wegen nicht dargestelltes elektrisches Kabel. Ferner ist anhand der Fig. 2 bis 6 dargestellt, daß das Verteilergehäuse 1 wenigstens zwei Austrittsöffnungen 5 für von dem erwähnten Kabel abgezweigte elektrische Anschlüsse aufweist. Ferner ist es quaderförmig oder im Ausführungsbeispiel etwa würfelförmig ausgebildet, hat also sechs Flächen, wobei die Eintrittsöffnung 4 sowie die Austrittsöffnungen 5 jeweils an einer Fläche dieses Quaders oder Würfels angeordnet sind und zwar, wie in den Zeichnungen deutlich erkennbar, jeweils etwa in der Mitte einer solchen Fläche. Jeweils zwei einander gegenüberliegende Flächen sind im Ausführungsbeispiel hingegen geschlossen, weisen also weder eine Eintritts- noch eine Austrittsöffnung auf.

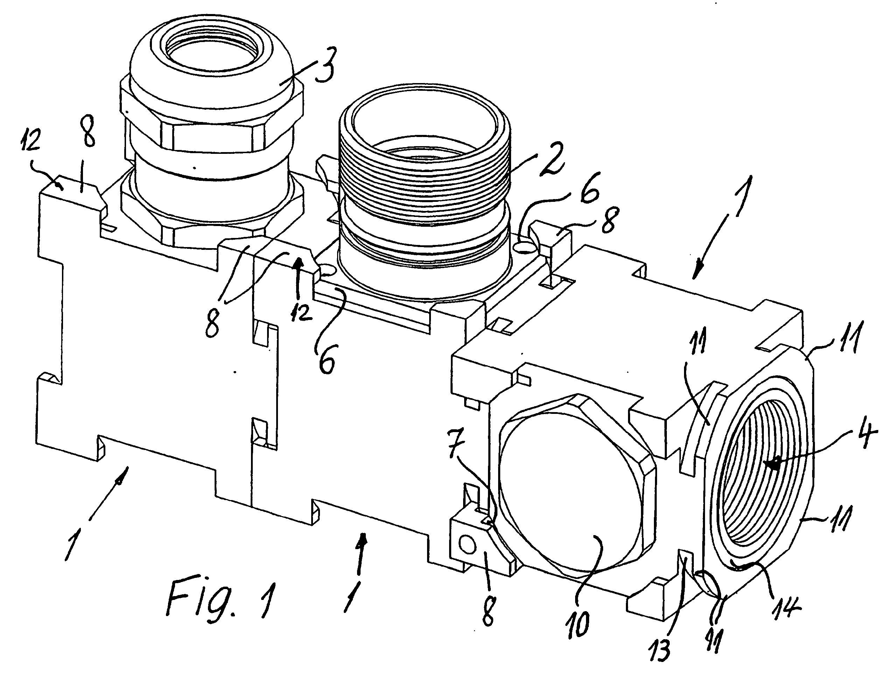

Im Bereich der Austrittsöffnungen 5 sind noch näher zu beschreibende Verbindungsmittel zum Befestigen von die abgehenden elektrischen Anschlüsse enthaltenden Anschlußteilen 2 für deren Montage (Fig. 1) vorgesehen. Dabei ist zumindest im Bereich der Austrittsöffnungen 5 an dem Verteilergehäuse 1 jeweils als Verbindungsmittel eine noch zu beschreibende Schnellkupplung vorgesehen, zu der eine an dem Anschlußteil 2 angeordnete Gegenkupplung paßt.

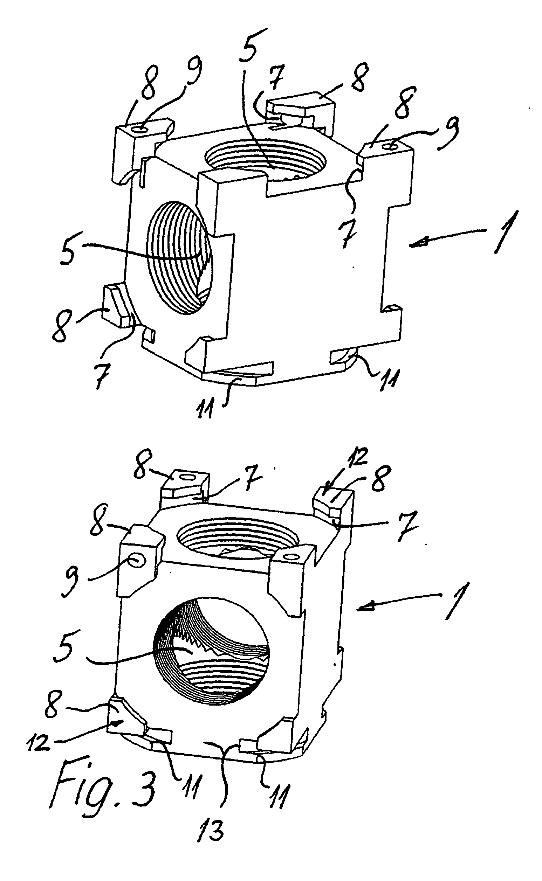

Gemäß Fig. 1 ist dieses Gegenkupplung an dem Anschlußteil 2 ein im wesentlichen viereckiger Flansch 6, dessen Ecken abgerundet sind. Die Schnellkupplung an dem Verteilergehäuse 1 wird durch den Flansch 6 in Gebrauchsstellung im Eckbereich gemäß Fig. 1 übergreifende, mit Hinterschneidungen 7 ausgestattete krallenartige Vorsprünge 8 gebildet, von denen man jeweils vier im Bereich einer Austrittsöffnung 5 erkennt. Diese Vorsprünge 8 stehen dabei über die die zugehörige Eintrittsöffnung aufweisende Seitenfläche des Verteilergehäuses 1 über, wobei die eine Begrenzung der Hinterschneidungen 7 jeweils etwa in der Ebene der zugehörigen Seitenfläche angeordnet ist bzw. von dieser Seitenfläche gebildet wird. In Fig. 3 erkennt man an den Vorsprüngen 8 ganz deutlich, daß die nutartige Hinterschneidung 7 im Bereich des Verteilergehäuses von der entsprechenden Seitenfläche begrenzt wird, während eine weitere Begrenzung dieser Hinterschneidung 8 mit Abstand parallel oberhalb dieser Seitenfläche verläuft.

Die Vorsprünge 8 mit den Hinterschneidungen 7 haben außerdem auch durch ihre Anordnung an den jeweiligen Ecken der entsprechenden Seitenflächen einen derartigen Abstand zueinander oder zwischen sich, daß die Ecken der Flansche 6 entsprechende Anschlußteile 2 vor einem Verdrehen dieser Flansche unter die Hinterschneidungen 7 zwischen benachbarte Vorsprünge 8 passen, so daß die Ecken der Flansche 6 von der Seite in die Hinterschneidungen 7 eindrehbar sind.

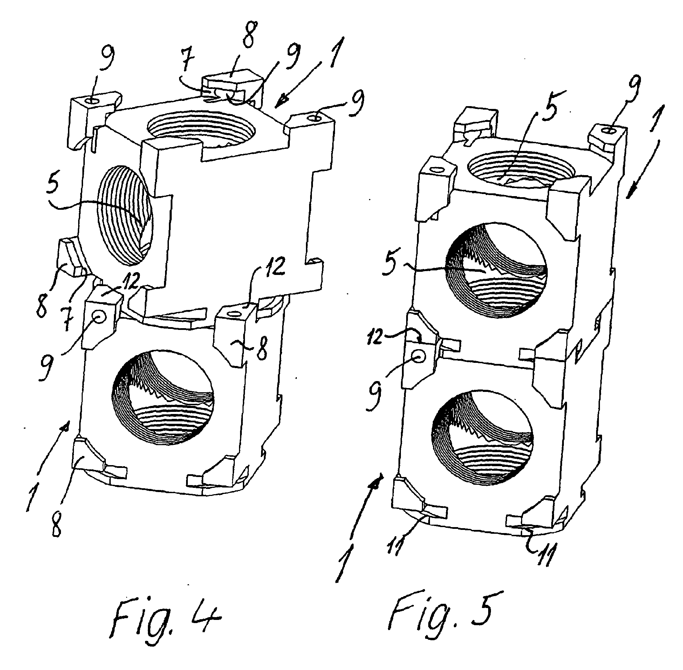

In noch zu beschreibender Weise sind die Verteilergehäuse 1 selbst auch als Anschlußteile ausgebildet, können also mit einer solchen durch Vorsprünge 8 gebildeten Schnellkupplung verbunden werden. Dies ist anhand der Fig. 3 bis 5 und insbesondere anhand der Fig. 4 deutlich erkennbar, wo auch die zunächst etwas verdrehte Position der beiden zu kuppelnden Teile dargestellt ist. In analoger Weise kann ein Anschlußteil 2 mit einem Flansch 6 mit einer entsprechenden aus Vorsprüngen 8 und Hinterschneidungen 7 gebildeten Schnellkupplung durch eine Drehung um etwa 45 Grad gekuppelt, also sehr schnell verbunden werden.

Vor allem in den Fig. 2 und 3 sind Bohrungen 9 angedeutet, die sich jeweils an einem Vorsprung 8 befinden und in den Bereich von dessen Hinterschneidung 7 ragen. Diese Bohrungen 9 nehmen Klemm- oder Madenschrauben auf, die nach der Durchführung der gegenseitigen Verbindung eingedreht werden können, um die durch Schnellkupplung und Gegenkupplung gebildete Verbindung zu arretieren. Es genügt also eine geringfügige Schraubbewegung, um die Sicherheit der gegenseitigen Verbindung zu verbessern.

Im Ausführungsbeispiel sind drei Austrittsöffnungen 5 jeweils mit einer Schnellkupplung, also mit entsprechenden Vorsprüngen 8 in den Eckbereichen, vorgesehen. Dabei sind einzelne Vorsprünge 8 so gestaltet, so daß über zwei im Winkel zueinander stehende Seitenflächen überstehen und jeweils dort Hinterschneidungen haben, wenn nämlich entsprechende im Winkel zueinander stehende Flächen jeweils eine Austrittsöffnung 5 aufweisen.

Dabei fluchtet jeweils eine der Austrittsöffnungen 5 mit der Eintrittsöffnung 4, während die beiden anderen Austrittsöffnungen 5 miteinander fluchten. Dies führt also im Ausführungsbeispiel zu insgesamt vier Öffnungen, so daß zwei der Seitenflächen des Verteilergehäuses geschlossen, d.h. ohne Eintritts- oder Austrittsöffnung sind. Da jedoch mehrere Verteilergehäuse unter Umständen auch in unterschiedlicher gegenseitiger Drehorientierung verbunden werden können, läßt sich dennoch ein modularer Aufbau von Verteilergehäusen gemäß Fig. 1 bilden, bei welchem praktisch nach beliebigen Seiten orientierte Austrittsöffnungen 5 vorhanden sind, wobei in Fig. 1 eine nach vorne zum Betrachter gerichtete Austrittsöffnung mit einer Verschlußschraube 10 verschlossen ist, weil diese Austrittsöffnung 5 in dem dargestellten Beispiel nicht benötigt wird. Stattdessen kann aber die diesem Verschlußstopfen 10 gegenüberliegende, von dem Betrachter abgewandte Austrittsöffnung für einen elektrischen Anschluß genutzt werden.

Es wurde schon erwähnt, daß zwei oder mehr Verteilergehäuse 1 auch miteinander verbunden werden können, also ein Verteilergehäuse 1 auch ein Anschlußteil eines weiteren Verteilergehäuses 1 bilden kann, wie es auch in den Fig. 3 bis 6 sowie in Figur 1 dargestellt ist.

Zu diesem Zweck ist an einer eine Eintrittsöffnung 4 aufweisenden Fläche des Verteilergehäuses eine zu den Schnellkupplungen der Austrittsöffnungen 5 passende Gegenkupplung angeordnet. Dabei weist diese im Bereich einer Eintrittsöffnung 3 angeordnete Gegenkupplung zu der Schnellkupplung und den dort vorgesehenen Hinterschneidungen 7 passende Kupplungsvorsprünge 11 auf, die gegenüber der die Eintrittsöffnung 4 aufweisenden Seitenfläche des Verteilergehäuses 1 einen axialen Abstand haben, der etwa dem Abstand zwischen einer Hinterschneidung 7 und der Stirnseite 12 des zugehörigen Vorsprungs 8 entspricht. Somit passen die Kupplungsvorsprünge 11 in die Hinterschneidungen 7 und können nach einer entsprechenden Zusammenführung zweier Verteilergehäuse 1 gemäß Fig. 4 durch deren gegenseitige Verdrehung um eine Mittelachse in die in Fig. 5 dargestellte Verbindungsposition gebracht werden, in welcher dann die Kupplungsvorsprünge 11 von den Hinterschneidungen 7 aufgenommen und gehalten sind. Gleichzeitig liegen dadurch die Berührstellen fest aneinander.

Die zu der Schnellkupplung passenden Kupplungsvorsprünge 11 sind dabei an einem gegenüber der Seitenfläche vorspringenden Ring 13 angeordnet und stehen diesem gegenüber radial nach außen vor, was in Fig. 2 besonders deutlich erkennbar ist. Dabei sind die Kupplungsvorsprünge 11 selbst nicht als umlaufender Ring ausgebildet, sondern verlaufen an dem Ring 13 jeweils über einen Umfangsbereich, der gleich oder kürzer als der Abstand zwischen zwei benachbarten, Hinterschneidungen 7 aufweisenden Vorsprüngen 8 der Schnellkupplung ist. Praktisch bilden diese Kupplungsvorsprünge 11 also ihrerseits eine Form, die einem Flansch 6 eines Anschlußteiles 2 etwa entspricht. Dabei erkennt man deutlich, daß diese Kupplungsvorsprünge 11 jeweils in Winkel- oder Eckbereichen der entsprechenden Fläche des würfelförmigen Verteilergehäuses angeordnet sind und die Unterbrechung bzw. der Abstand zwischen diesen Kupplungsvorsprüngen 11 im Bereich von rechtwinklig abgehenden Seitenflächen angeordnet ist. Nach einem Kupplung mit einem weiteren Verteilergehäuse 1 stimmen somit auch die jeweiligen Kanten etwa überein bzw. setzen sich fort.

Zur Montage von einem Verteilergehäuse 1 an einem weiteren werden diese also zunächst gemäß Fig. 3 und 4 so zusammengeführt, daß die Kupplungsvorsprünge 11 nach der gegenseitigen Berührung der aneinander zugewandten Seitenflächen zwischen den Vorsprüngen 8 zu liegen kommen. Durch eine Drehbewegung eines der Verteilergehäuse 1 gegenüber dem anderen gelangen dann die Kupplungsvorsprünge 11 in die Hinterschneidungen 7, wobei gleichzeitig die diese Hinterschneidungen 7 aufweisenden oder bildenden Vorsprünge 8 zwischen die Kupplungsvorsprünge 11 und den diese tragenden Ring 13 und die dort angeordnete Seitenfläche des Verteilergehäuses 1 gelangen, so daß die in Fig. 4 und 5 dargestellte zumindest in axialer Richtung feste Verbindung zwischen den beiden Verteilergehäusen 1 entsteht, die dann durch eine schon erwähnte Klemmschraube auch in Drehrichtung fixiert oder blockiert werden kann.

Im Ausführungsbeispiel haben alle Austrittsöffnungen 5 und die Eintrittsöffnung 4 denselben Durchmesser. Ferner haben sie alle ein übereinstimmendes Innengewinde, so daß auch Anschlußteile 3 angebracht werden können, die mit einem Außengewinde versehen sind, wie beispielsweise die als Anschlußteil 3 in Fig. 1 gekennzeichnete Kabelverschraubung. Auch der Blindverschluß 10 ist in ein entsprechendes Innengewinde eingeschraubt. Praktisch ergibt sich somit an den Eintritts- und Austrittsöffnungen eine weitere Kupplungsmöglichkeit, durch die die Vielseitigkeit des Verteilergehäuses 1 bzw. des aus mehreren Verteilergehäusen und Anschlußteilen bestehenden Bausatzes vergrößert wird.

Da die radial zur Mitte hin offenen Hinterschneidungen 7 in Umfangsrichtung an ihren beiden Enden offen sind, können die Kupplungsbewegungen wahlweise in der einen oder anderen Drehrichtung erfolgen. Auch dies erleichtert die Montage.

Insbesondere in Fig. 2 erkennt man noch, daß an dem als Gegenkupplung mit radial abstehenden Kupplungsvorsprüngen 11 ausgebildeten Ring 13 stirnseitig eine Nut 14 zur Aufnahme eines Dichtringes angeordnet ist. Somit kann beim gegenseitigen Verbinden solcher Verteilergehäuse 1 die Verbindungsstelle zusätzlich abgedichtet werden. Ferner wird beim Zusammenfügen zweier Verteilergehäuse 1 ein solcher Dichtring axial zusammengedrückt, übt also in axialer Richtung eine entsprechende Druckkraft aus, die die gegenseitige Kupplung zweier Verteilergehäuse spielfrei macht.

Zusammenfassend ergibt sich, daß ein Verteilergehäuse 1 mit Anschlußteilen 2 und 3, die aber auch weitere Verteilergehäuse 1 sein können, mit Hilfe einer Schnellkupplung und einer entsprechenden Gegenkupplung modular in nahezu beliebiger Form und gegenseitiger Orientierung zusammengefügt werden kann, um unterschiedlichste elektrischen Anschlüsse anbringen zu können. Dabei kann die gegenseitige Verbindung der einzelnen Teile mittel Schnellkupplung erfolgen, so daß ein zeitaufwendiges Anbringen von mehreren Befestigungsschrauben an entsprechenden Flanschen vermieden wird.

## Patentansprüche

1. Verteilergehäuse (1) mit Anschlußteilen (2,3) für elektrische Anschlüsse, wobei das Verteilergehäuse (1) wenigstens eine Eintrittsöffnung (4) für ein elektrisches Kabel und mindestens zwei Austrittsöffnungen (5) für von dem Kabel abgezweigte elektrische Anschlüsse aufweist und etwa quaderförmig ausgebildet ist, wobei die Eintrittsöffnung (4) sowie die Austrittsöffnungen (5) jeweils an einer Fläche dieses Quaders angeordnet sind und im Bereich der Austrittsöffnungen (5) zum Befestigen von die abgehenden elektrischen Anschlüsse enthaltenden Anschlußteilen (2) Verbindungsmittel für deren Montage vorgesehen sind, **dadurch gekennzeichnet, daß** zumindest im Bereich der Austrittsöffnungen an dem Verteilergehäuse (1) jeweils eine Schnellkupplung vorgesehen ist, zu der eine an dem Anschlußteil (2) angeordnete Gegenkupplung paßt, wobei die Gegenkupplung an dem Anschlußteil (2) ein im wesentlichen vieleckiger oder viereckiger Flansch (6) ist, dessen Ecken abgeschrägt oder abgerundet sind, und wobei die Schnellkupplung an dem Verteilergehäuse (1) durch den Flansch (6) in Gebrauchsstellung im Eckbereich übergreifende, mit Hinterschneidungen (7) ausgestattete Vorsprünge (8) gebildet ist, welche über die die zugehörige Eintritts- und/oder Austrittsöffnung aufweisende Seitenfläche des Verteilergehäuses (1) überstehen, und eine Begrenzung der Hinterschneidungen (7) jeweils etwa in der Ebene der Seitenfläche angeordnet oder von dieser gebildet ist, und daß die Vorsprünge (8) mit den Hinterschneidungen (7) einen derartigen Abstand zueinander haben, daß die Ecken der Flansche (6) vor dem Verdrehen dieser Flansche unter die Hinterschneidungen (7) zwischen benachbarte Vorsprünge (8) passen, so daß die Ecken der Flansche (6) von der Seite in die Hinterschneidungen (7) eindrehbar sind.

2. Verteilergehäuse nach Anspruch 1, **dadurch gekennzeichnet, daß** an wenigstens einem Vorsprung (8) im Bereich seiner Hinterschneidung (7) ein Klemmelement vorgesehen ist.

3. Verteilergehäuse nach Anspruch 2, **dadurch gekennzeichnet, dass** das Klemmelement eine Klemmschraube oder Madenschraube ist.

4. Verteilergehäuse nach einem der Ansprüche 1 bis 3, **dadurch gekennzeichnet, daß** drei Austrittsöffnungen (5) jeweils mit einer Schnellkupplung vorgesehen sind.

5. Verteilergehäuse nach einem der Ansprüche 1 bis 4, **dadurch gekennzeichnet, daß** eine der Austrittsöffnungen (5) mit der Eintrittsöffnung (4) und die beiden anderen Austrittsöffnungen (5) miteinander fluchten.

6. Verteilergehäuse nach einem der Ansprüche 1 bis 5, **dadurch gekennzeichnet, daß** das Verteilergehäuse (1) etwa die Form eines Würfels hat und an vier, fünf oder allen sechs Seitenflächen Öffnungen vorgesehen sind, die als Eintritts- und/oder Austrittsöffnungen ausgestaltet und mit Schnellkupplungen versehen sind.

7. Verteilergehäuse nach einem der Ansprüche 1 bis 6, **dadurch gekennzeichnet, daß** an seiner eine Eintrittsöffnung (4) aufweisenden Fläche eine zu den Schnellkupplungen der Austrittsöffnungen (5) passende Gegenkupplung angeordnet und das Verteilergehäuse (1) mit dem Bereich seiner Eintrittsöffnung (4) mit einem weiteren Verteilergehäuse (1) im Bereich von einer von dessen Austrittsöffnungen (5) kuppelbar ist, so daß mehrere derartige übereinstimmende Verteilergehäuse (1) modular kombinierbar sind.

8. Verteilergehäuse nach einem der Ansprüche 1 bis 7, **dadurch gekennzeichnet, daß** an mehreren seiner Flächen im Bereich mehrerer Eintrittsöffnungen (4) jeweils Gegenkupplungen angeordnet sind.

9. Verteilergehäuse nach einem der Ansprüche 1 bis 8, **dadurch gekennzeichnet, daß** die im Bereich von Eintrittsöffnungen (4) angeordnete Gegenkupplung zu der Schnellkupplung und den dort vorgesehenen Hinterschneidungen (7) passende Kupplungsvorsprünge (11) aufweist, die gegenüber der die Eintrittsöffnung (4) aufweisenden Seitenfläche des Verteilergehäuses (1) einen Abstand haben, der etwa dem Abstand zwischen einer Hinterschneidung (7) und der Stirnseite (12) des zugehörigen Vorsprungs (8) entspricht.

10. Verteilergehäuse nach einem der Ansprüche 1 bis 9, **dadurch gekennzeichnet, daß** die zu der Schnellkupplung passenden Kupplungsvorsprünge (11) an einem gegenüber der Seitenfläche vorspringenden Ring (13) angeordnet und diesem gegenüber radial vorstehen.

11. Verteilergehäuse nach einem der Ansprüche 1 bis 10, **dadurch gekennzeichnet, daß** die an dem Ring (13) angeordneten Kupplungsvorsprünge (11) über einen Umfangsbereich verlaufen, der gleich oder kürzer als der Abstand zwischen zwei benachbarten, Hinterschneidungen (7) aufweisenden Vorsprüngen (8) der Schnellkupplung ist.

12. Verteilergehäuse nach einem der Ansprüche 1 bis 11, **dadurch gekennzeichnet, daß** alle Austrittsöffnungen (5) oder alle Austrittsöffnungen (5) und die Eintrittsöffnungen (4) an dem Verteilergehäuse denselben Durchmesser haben.

13. Verteilergehäuse nach einem der Ansprüche 1 bis 12, **dadurch gekennzeichnet, daß** die Eintritts- und/oder Austrittsöffnungen ein Innengewinde haben.

14. Verteilergehäuse nach einem der Ansprüche 1 bis 13, **dadurch gekennzeichnet, daß** an dem als Gegenkupplung mit radial abstehenden Kupplungsvorsprüngen (11) ausgebildeten Ring (13) stirnseitig wenigstens eine Nut (14) zur Aufnahme eines Dichtringes angeordnet ist.

15. Verteilergehäuse nach einem der vorstehenden Ansprüche, **dadurch gekennzeichnet, daß** die radial zur Mitte offenen Hinterschneidungen (7) in Umfangsrichtung an ihren beiden Enden offen sind.

## Claims

1. Distribution box (1) with connecting members (2, 3) for electrical connections, the distribution box (1) having at least one entry opening (4) for an electrical cable and at least two exit openings (5) for electrical connections branching off from the cable, and being substantially cuboid in shape, the entry opening (4) and the exit openings (5) each being disposed on one face of this cuboid and, for the purpose of securing connecting members (2) containing the outgoing electrical connections, connecting means for the assembly thereof being provided in the region of the exit openings (5), **characterised in that** at least in the region of each exit opening on the distribution box (1) is provided at least one quick-acting coupling which fits a mating coupling provided on the connecting member (2), the mating coupling on the connecting member (2) being a substantially polygonal or rectangular flange (6) the corners of which are chamfered or rounded, the quick-acting coupling on the distribution box (1) being formed by projections (8) provided with undercuts (7), which overlap the flange (6) in the corner region thereof in the position of use, said projections (8) protruding over the side face of the distribution box (1) which comprises the associated entry and/or exit opening, and a boundary to the undercuts (7) is disposed substantially in the plane of the side face or is formed thereby, and the projections (8) with the undercuts (7) are spaced from one another such that the corners of the flanges (6), before these flanges are rotated under the undercuts (7), fit between adjacent projections, so that the corners of the flanges (6) can be rotated into the undercuts (7) from the side.

2. Distribution box (1) according to claim 1, **characterised in that** a clamping element is provided on at least one projection (8) in the region of its undercut (7).

3. Distribution box according to claim 2, **characterised in that** the clamping element is a clamping screw or grub screw.

4. Distribution box according to one of claims 1 to 3, **characterised in that** three exit openings (5) are each provided with a quick-acting coupling.

5. Distribution box according to one of claims 1 to 4, **characterised in that** one of the exit openings (5) is aligned with the entry opening (4) and the other two exit openings (5) are aligned with each other.

6. Distribution box according to one of claims 1 to 5, **characterised in that** the distribution box (1) is substantially in the form of a cube and openings are provided on four, five or all six sides, which are in the form of entry and/or exit openings and are provided with quick-acting couplings.

7. Distribution box according to one of claims 1 to 6, **characterised in that** on its side comprising an entry opening (4) is mounted a mating coupling that fits the quick-acting couplings of the exit openings (5) and the distribution box (1) can be coupled, in the region of its entry opening (4), to another distribution box (1) in the region of one of the exit openings (5) thereof, so that a plurality of such corresponding distribution boxes (1) can be combined with one another in modular manner.

8. Distribution box according to one of claims 1 to 7, **characterised in that** mating couplings are provided on several of its sides, in the region of several entry openings (4).

9. Distribution box according to one of claims 1 to 8, **characterised in that** the mating coupling disposed in the region of entry openings (4) comprises coupling projections (11) which fit the quick-acting coupling and the undercuts (7) provided thereon, said coupling projections being arranged at a spacing from the side of the distribution box (1) containing the entry opening (4) which corresponds substantially to the spacing between an undercut (7) and the end face (12) of the associated projection (8).

10. Distribution box according to one of claims 1 to 9, **characterised in that** the coupling projections (11) fitting the quick-acting coupling are arranged on a ring (13) projecting relative to the side face and protrude radially relative to said ring.

11. Distribution box according to one of claims 1 to 10, **characterised in that** the coupling projections (11) disposed on the ring (13) extend over a part of the circumference which is equal to or shorter than the spacing between two adjacent projections (8) of the quick-acting coupling which comprise undercuts (7).

12. Distribution box according to one of claims 1 to 11, **characterised in that** all the exit openings (5) or all the exit openings (5) and the entry openings (4) on the distribution box have the same diameter.

13. Distribution box according to one of claims 1 to 12, **characterised in that** the entry and/or exit openings have an internal thread.

14. Distribution box according to one of claims 1 to 13, **characterised in that** at least one groove (14) for accommodating a gasket is provided on the end face of the ring (13) which is formed as a mating coupling with radially protruding coupling projections (11).

15. Distribution box according to one of the preceding claims,
**characterised in that** the undercuts (7) radially open to the-centre are open at both ends in the circumferential direction.

## Revendications

1. Boîte de distribution (1) avec des pièces de connexion (2, 3) pour des connexions électriques, sachant que la boîte de distribution (1) présente au moins une ouverture d'entrée (4) pour un câble électrique et au moins deux ouvertures de sortie (5) pour des connexions électriques dérivées du câble et est réalisée approximativement parallélépipédique, sachant que l'ouverture d'entrée (4) et les ouvertures de sortie (5) sont respectivement disposées sur une face de ce parallélépipède et que des moyens d'assemblage sont prévus dans la région des ouvertures de sortie (5) pour le montage de pièces de connexion (2) contenant les connexions électriques sortantes, afin de fixer ces pièces, **caractérisée en ce qu'**un accouplement rapide respectif est prévu sur la boîte de distribution (1) au moins dans la région des ouvertures de sortie, auquel correspond un accouplement complémentaire disposé sur la pièce de connexion (2), sachant que l'accouplement complémentaire sur la pièce de connexion (2) est un flasque (6) essentiellement polygonal ou quadrangulaire dont les coins sont chanfreinés ou arrondis, et sachant que l'accouplement rapide prévu sur la boîte de distribution (1) est formé par des saillies (8) qui, en position d'utilisation, engagent en recouvrement le flasque (6) dans la région de ses coins, et qui sont équipées de contre-dépouilles (7), les saillies (8) dépassant de la face latérale de la boîte de distribution (1) qui présente l'ouverture associée d'entrée et/ou de sortie, et une délimitation des contre-dépouilles (7) étant respectivement disposée environ dans le plan de la face latérale ou étant formée par ce plan, et **en ce que** les saillies (8) avec les contre-dépouilles (7) présentent une distance mutuelle telle que les coins des flasques (6), avant la rotation relative de ces flasques, passent sous les contre-dépouilles (7) entre des saillies voisines (8), de sorte que les coins des flasques (6) peuvent être insérés par rotation par le côté dans les contre-dépouilles (7).

2. Boîte de distribution selon la revendication 1, **caractérisée en ce qu'**un élément de serrage est prévu sur au moins une saillie (8) dans la région de sa contre-dépouille (7).

3. Boîte de distribution selon la revendication 2, **caractérisée en ce que** l'élément de serrage est une vis de serrage ou une vis sans tête.

4. Boîte de distribution selon l'une des revendications 1 à 3, **caractérisée en ce que** trois ouvertures de sortie (5) sont chacune pourvues d'un accouplement rapide.

5. Boîte de distribution selon l'une des revendications 1 à 4, **caractérisée en ce qu'**une des ouvertures de sortie (5) est alignée avec l'ouverture d'entrée (4) et les deux autres ouvertures de sortie (5) sont mutuellement alignées.

6. Boîte de distribution selon l'une des revendications 1 à 5, **caractérisée en ce que** la boîte de distribution (1) possède approximativement la forme d'un cube et des ouvertures sont prévues sur quatre, sur cinq ou sur les six faces latérales, ouvertures qui sont conçues comme ouvertures d'entrée et/ou de sortie et sont pourvues d'accouplements rapides.

7. Boîte de distribution selon l'une des revendications 1 à 6, **caractérisée en ce qu'**un accouplement complémentaire adapté aux accouplements rapides des ouvertures de sortie (5) est disposé sur sa face présentant une ouverture d'entrée (4), et la boîte de distribution (1) peut être accouplée par la région de son ouverture d'entrée (4) à une autre boîte de distribution (1) dans la région d'une des ouvertures de sortie (5) de cette dernière, de sorte que plusieurs boîtes de distribution (1) identiques de ce genre peuvent être combinées de façon modulaire.

8. Boîte de distribution selon l'une des revendications 1 à 7, **caractérisée en ce que** des accouplements complémentaires sont respectivement disposés sur plusieurs de ses faces, dans la région de plusieurs ouvertures d'entrée (4).

9. Boîte de distribution selon l'une des revendications 1 à 8, **caractérisée en ce que** l'accouplement complémentaire disposé dans la région d'ouvertures d'entrée (4) présente des saillies d'accouplement (11) adaptées à l'accouplement rapide et aux contre-dépouilles (7) qui y sont prévues, saillies qui présentent une distance, par rapport à la face latérale de la boîte de distribution (1) présentant l'ouverture d'entrée (4), qui correspond approximativement à la distance entre une contre-dépouille (7) et la face frontale (12) de la saillie associée (8).

10. Boîte de distribution selon l'une des revendications 1 à 9, **caractérisée en ce que** les saillies d'accouplement (11) adaptées à l'accouplement rapide sont disposées sur une bague (13) saillante par rapport à la face latérale et dépassent radialement de cette bague.

11. Boîte de distribution selon l'une des revendications 1 à 10, **caractérisée en ce que** les saillies d'accouplement (11) disposées sur la bague (13) s'étendent sur une région circonférentielle qui est égale à ou qui est plus courte que la distance entre deux saillies voisines (8) de l'accouplement rapide présentant des contre-dépouilles (7).

12. Boîte de distribution selon l'une des revendications 1 à 11, **caractérisée en ce que** toutes les ouvertures de sortie (5) ou toutes les ouvertures de sortie (5) et les ouvertures d'entrée (4) prévues sur la boîte de distribution ont le même diamètre.

13. Boîte de distribution selon l'une des revendications 1 à 12, **caractérisée en ce que** les ouvertures d'entrée et/ou les ouvertures de sortie possèdent un filetage intérieur.

14. Boîte de distribution selon l'une des revendications 1 à 13, **caractérisée en ce qu'**au moins une rainure (14) destinée à recevoir un joint d'étanchéité annulaire est disposée sur le côté frontal de la bague (13) conçue comme accouplement complémentaire doté de saillies d'accouplement (11) dépassant radialement.

15. Boîte de distribution selon l'une des revendications précédentes, **caractérisée en ce que** les contre-dépouilles (7), ouvertes radialement vers le milieu, sont ouvertes à leurs deux extrémités en direction circonférentielle.
